# EUROPÄISCHE PATENTSCHRIFT

(11) **EP 0 528 445 B1**
(45) Veröffentlichungstag und Bekanntmachung des Hinweises auf die Patenterteilung: **17.05.1995**
(21) Anmeldenummer: 92116516.3
(22) Anmeldetag: 09.06.1989
(51) Int. Cl.: H02B 11/12

(54) **Hilfsschalteranordnung für einen Schaltereinschub**
Auxiliary switch for a slide in circuit breaker
Interrupteur auxiliaire pour un disjoncteur embrochable

(30) Priorität: 13.10.1988 DE 3834820
(43) Veröffentlichungstag der Anmeldung: 24.02.1993
(62) Teilanmeldung aus: 89110441.6
(73) Patentinhaber: Licentia Patent-Verwaltungs-GmbH, 60596 Frankfurt (DE)
(72) Erfinder: Krafft, Henning, Dipl.-Ing., W-2350 Neumünster (DE); Grahlmann, Klaus, W-2350 Neumünster (DE); Grimm, Jörn, Dipl.-Ing., W-2302 Böhnhusen (DE)
(74) Vertreter: Vogl, Leo, Dipl.-Ing.

(56) Entgegenhaltungen:
- EP-A- 0 133 152
- EP-A- 0 236 179

## Beschreibung

Die Erfindung betrifft eine Hilfsschalteranordnung für einen Schaltereinschub gemäß dem Oberbegriff des Anspruchs 1.

Aus der EP 133 152 ist eine Anordnung zum Anschluß von Hilfsleitungen an ein Schaltgerät oder eine Schaltgerätekombination bekannt, wobei an dem Schaltgerät eine Klemmleiste angebracht ist, die Kontaktglieder für schaltseitige Hilfsleitungen besitzt. Eine Steuerung der Hilfsschalter über einen Steuerschieber ist hier nicht vorgesehen.

Allgemein sind Hilfsschalteraufnahmen bisher unterhalb oder oberhalb des Einschubgerätes im Einschubträger angeordnet. Außerdem werden die Hilfsschalter über Nocken oder Hebel betätigt, die vom Einschubgerät bewegt werden.

Der Erfindung liegt die Aufgabe zugrunde, eine sichere Hilfsschalterbefestigung für eine Einschubtechnik mit verfahrbarem Hauptkontaktträger zu schaffen, welche die Einbauhöhe der Einschübe nicht beeinflußt.

Diese Aufgabe wird erfindungsgemäß durch die im Kennzeichen des Anspruchs 1 angegebenen Merkmale gelöst.

Die Erfindung hat den Vorteil, daß über die direkte Anlenkung des Schiebers der Hilfsschalterbefestigung an den Kontaktbrückenträger eine funktionssichere Kopplung zwischen der Steuerung der Hauptstromkreisverbindungen und den Hilfsschaltern hergestellt wird.

Vorteilhafte Weiterbildungen sind in den Unteransprüchen angegeben. Hingewiesen werden soll dabei auf das Merkmal, daß bei der Hilfsschalterbefestigung eine Vielzahl von Hilfsschaltern gemäß den in den Unteransprüchen enthaltenen Weiterbildungen in platzsparender Weise und mittels einfachen Befestigungsmitteln in ein Gehäuse eingesetzt werden kann. Weiterhin ist eine große Variierbarkeit der Steuerfunktionen durch austauschbare Steuereinsätze gegeben.

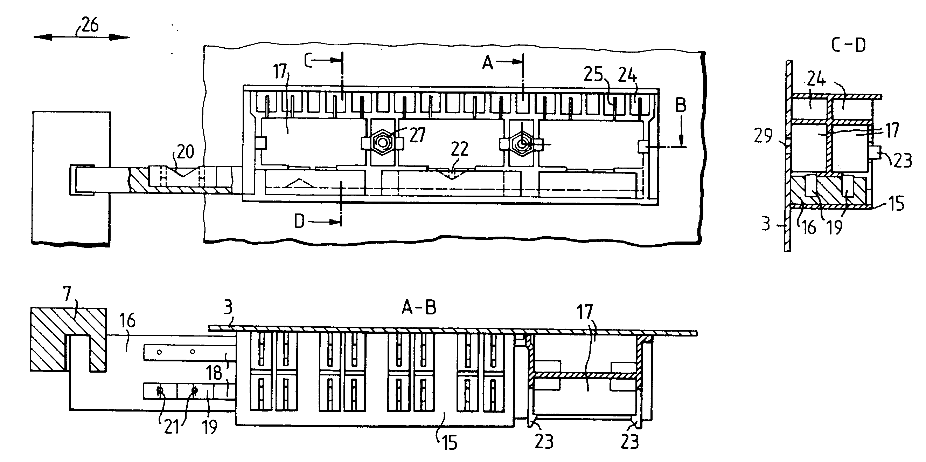

Anhand der Zeichnung wird ein Ausführungsbeispiel der Erfindung näher erläutert.

In der Figur ist das Gehäuse 15 für die Aufnahme der Hilfsschalter 17 und die Anlenkung an einen Kontaktbrückenträger in drei Ansichten, teilweise in geschnittener Darstellung, gezeigt. Das Gehäuse 15 ist mit zwei nebeneinanderliegenden Reihen zu je drei Hilfsschaltern 17 und einem Schieber 16 bestückt. Der Schieber 16 ist in dem Gehäuse 15 unterhalb der Hilfsschalter 17 geführt und über ein Verbindungselement 7 direkt an einen in der Zeichnung nicht dargestellten Kontaktbrückenträger angelenkt. Ein Richtungspfeil 26 zeigt die Bewegungsrichtungen des Schiebers 16 in dem Gehäuse 15. Auf dem Schieber 16 sind auf zwei nebeneinanderliegenden Steuerbahnen 18 Einsätze 19 mit Schrauben 21 befestigt. Die Einsätze 19 sind an ihrer Oberseite mit keilförmigen Steuerkonturen 20 versehen.

Wie aus der Draufsicht zu ersehen ist, werden die Hilfsschalter 17 der vorderen Reihe mit Schnappelementen 23 in dem Gehäuse 15 gehalten. Die Hilfsschalter 17 der der Seitenwand 3 benachbarten Reihe sind durch die rückwärtigen Öffnungen 29 in das Gehäuse 15 gesteckt und bei Anbau des Halters durch die Seitenwand 3 auf ihren Plätzen gesichert. Abweichend davon läßt sich eine Befestigung der Hilfsschalter 17 mittels Schnappelementen 23 wirkungsvoll auch allgemein in dem Gehäuse 15 verwenden.

Zwecks Variation der Steuerfunktionen sind einzelne Einsätze 19 mit ihrer Auflagefläche 28 nach oben weisend auf der Steuerbahn 18 befestigt, wodurch die glatte Auflagefläche statt die keilförmige Steuerkontur 20 mit den Stösseln 22 der Hilfsschalter 17 zusammenwirkt. In der Figur ist ein so eingesetzter Einsatz in der Vorderansicht erkennbar. Es ist dies der dritte Einsatz von rechts gesehen. Die Austauschbarkeit der Einsätze ermöglicht ebenfalls die Verwendung von beliebigen, anders geformten, Steuerkonturen.

Die Anschlußfahnen 25, der in die Aufnahme 15 eingesetzten Hilfsschalter 17, ragen in von oben frei zugängliche Anschlußkammern 24, so daß Steckverbinder auf die Anschlußfahnen 25 gesteckt werden können.

Mittels Schrauben 27 ist das Gehäuse 15 an der Seitenwand 3 des Einschubträgers befestigt.

## Patentansprüche

1. Hilfsschalteranordnung für einen Schaltereinschub, wobei die Hilfsschalter ortsfest am Einschubträger des Schaltereinschubes befestigt sind und in Abhängigkeit von den Betriebsstellungen AUS-TEST-EIN des Schalters gesteuert werden, **dadurch gekennzeichnet,** daß die Hilfsschalter (17) in einem am Einschubträger befestigten Gehäuse (15) aufgenommen sind und daß die Steuerung der Hilfsschalter (17) über einen Schieber (16) erfolgt, der an einem im Einschubträger verfahrbar angeordneten Kontaktbrückenträger für Hauptstromkreis-Verbindungen angelenkt ist.

2. Hilfsschalteranordnung nach Anspruch 1, **dadurch gekennzeichnet,** daß das Gehäuse (15) an der Seitenwand (3) des Einschubträgers befestigt ist und daß der Schieber (16) in dem Gehäuse (15) geführt ist.

3. Hilfsschalteranordnung nach Anspruch 1 oder 2, **dadurch gekennzeichnet,** daß der Schieber (16) mit Einsätzen (19) bestückt ist, die auf einer Steuerbahn (18) des Schiebers (16) angeordnet sind und daß die Einsätze (19) Steuerkonturen (20) aufweisen, die mit Stösseln (22) der Hilfsschalter (17) zusammenwirken.

4. Hilfsschalteranordnung nach Anspruch 3, **dadurch gekennzeichnet,** daß einzelne Einsätze (19) mit ihrer Steuerkontur (20) zur Steuerbahn (18) weisend auf dem Schieber (16) befestigt sind, so daß zwecks Variation der Steuerfunktion die Auflagefläche (28) mit den Stösseln (22) der Hilfsschalter (17) zusammenwirkt.

5. Hilfsschalteranordnung nach einem der Ansprüche 1 bis 4, **dadurch gekennzeichnet,** daß das Gehäuse (15) rückwärtige Öffnungen (29) zum Einsetzen der Hilfsschalter (17) aufweist und daß der Sitz der Hilfsschalter (17) in dem Gehäuse (15) durch die Seitenwand (3) des Einschubträgers gesichert ist.

6. Hilfsschalteranordnung nach einem der Ansprüche 3 bis 5, **dadurch gekennzeichnet,** daß die Hilfsschalter (17) in nebeneinanderliegenden Reihen in dem Gehäuse (15) angeordnet sind, denen auf dem Schieber (16) Steuerbahnen (18) zugeordnet sind.

7. Hilfsschalteranordnung nach Anspruch 6, **dadurch gekennzeichnet,** daß die Hilfsschalter (17) in der der Seitenwand (3) abgewandten Reihe mit Schnappelementen (23) in dem Gehäuse (15) gehalten sind.

8. Hilfsschalteranordnung nach einem der Ansprüche 1 bis 7, **dadurch gekennzeichnet,** daß das Gehäuse (15) Anschlußkammern (24) für Anschlußfahnen (25) der Hilfsschalter (17) mit Öffnungen für die Einführung von Anschlußkabel aufweist.

## Claims

1. Auxiliary switching arrangement for a switch plug-in unit, wherein the auxiliary switches are fastened to the plug-in unit carrier of the switch plug-in unit in stationary location and are controlled in dependence on the operational settings OFF-TEST-ON of the switch, characterised thereby that the auxiliary switches (17) are received in a housing (15) fastened to the plug-in unit carrier and that the control of the auxiliary switches (17) is effected by way of a slide (16), which is articulated to a contact bridge carrier, which is arranged to be movable into the plug-in unit carrier, for main current circuit connections.

2. Auxiliary switching arrangement according to claim 1, characterised thereby that the housing (15) is fastened to the side wall (3) of the plug-in unit carrier and that the slide (16) is guided in the housing (15).

3. Auxiliary switching arrangement according to claim 1 or 2, characterised thereby that the slide (16) is equipped with inserts (19), which are arranged on a control track (18) of the slide (16), and that the inserts (19) have control profiles (20) which cooperate with plungers (22) of the auxiliary switches (17).

4. Auxiliary switching arrangement according to claim 3, characterised thereby that individual inserts (19) are fastened on the slide (16) with their control profiles (20) facing towards the control track (18), so that the contact surface (28) co-operates with the plungers (22) of the auxiliary switches (17) for the purpose of variation of the control function.

5. Auxiliary switching arrangement according to one of claims 1 to 4, characterised thereby that the housing (15) has rearward openings (29) for the insertion of the auxiliary switches (17) and that the seating of the auxiliary switches (17) in the housing (15) is secured by the side wall of the insert carrier.

6. Auxiliary switching arrangement according to one of claims 3 to 5, characterised thereby that the auxiliary switches (17) are arranged in mutually adjacent rows in the housing (15), with which, on the slide (16), control paths (18) are associated.

7. Auxiliary switching arrangement according to claim 6, characterised thereby that the auxiliary switches (17) in the row remote from the side wall (3) are held in the housing (15) by snap elements (23).

8. Auxiliary switching arrangement according to claims 1 to 7, characterised thereby that the housing (15) has terminal chambers (24), with openings for the introduction of connecting cables, for connecting blades (25) of the auxiliary switches (17).

## Revendications

1. Dispositif d'interrupteurs auxiliaires pour un rack d'interrupteurs, les interrupteurs auxiliaires étant montés solidaires sur le porte-rack du rack d'interrupteurs et étant commandés suivant des positions de fonctionnement de l'interrupteur ARRÊT-TEST-MARCHE, caractérisé en ce que les interrupteurs auxiliaires (17) sont logés dans un coffret (15) fixé au porte-rack et en ce que la commande des interrupteurs auxiliaires (17) est effectuée par l'intermédiaire d'une coulisse (16) qui est articulée à un support de ponts de contact mobile dans le porte-rack pour établir la connexion avec le courant principal.

2. Dispositif d'interrupteurs auxiliaires selon la revendication 1, caractérisé en ce que le coffret (15) est fixé à la paroi latérale (3) du porte-rack et en ce que la coulisse (16) est guidée dans le coffret (15).

3. Dispositif d'interrupteurs auxiliaires selon la revendication 1 ou 2, caractérisé en ce que la coulisse (16) est garnie d'inserts (19) disposés sur une voie de commande (18) de la coulisse (16) et en ce que les inserts (19) présentent des contours de commande (20) qui coopèrent avec des poussoirs (22) des interrupteurs auxiliaires (17).

4. Dispositif d'interrupteurs auxiliaires selon la revendication 3, caractérisé en ce que les inserts (19) sont fixés sur la coulisse (16), en orientant leur contour de commande (20) en direction de la voie de commande (18) de manière que la surface d'application (28) coopère avec les poussoirs (22) des interrupteurs auxiliaires (17) afin de faire varier la fonction de commande.

5. Dispositif d'interrupteurs auxiliaires selon l'une des revendications 1 à 4, caractérisé en ce que le coffret (15) présente des ouvertures arrière (29) pour l'insertion des interrupteurs auxiliaires 17 et en ce que l'assise des interrupteurs auxiliaires (17) dans le coffret (15) est assurée par la paroi latérale (3) du porte-rack.

6. Dispositif d'interrupteurs auxiliaires selon l'une des revendications 3 à 5, caractérisé en ce que les interrupteurs auxiliaires (17) sont disposés dans le coffret 15 sur des rangées côte à côte qui correspondent à des voies de commande (18) sur la coulisse (16).

7. Dispositif d'interrupteurs auxiliaires selon la revendication 6, caractérisé en ce que, dans le coffret (15), les interrupteurs auxiliaires (17) sont maintenus dans la rangée détournée de la paroi latérale (3) par des éléments d'encliquetage (23).

8. Dispositif d'interrupteurs auxiliaires selon l'une des revendications 1 à 7, caractérisé en ce que le coffret (15) présente des cavités (24) pour les barrettes de bornes (25) des interrupteurs auxiliaires (17) et des ouvertures pour l'insertion de câbles de branchement.
